# EUROPÄISCHE PATENTSCHRIFT

(11) **EP 2 878 187 B1**
(45) Veröffentlichungstag und Bekanntmachung des Hinweises auf die Patenterteilung: **12.05.2021**
(21) Anmeldenummer: 14004000.7
(22) Anmeldetag: 26.11.2014
(51) Int. Cl.: A01C 7/20, A01C 15/04

(54) **Vorrichtung zum gezielten Ausbringen von Streugut, wie Saatgut**
Device for the targeted application of goods to be spread, in particular seed
Dispositif d'épandage ciblé de matériau d'épandage, en particulier de semences

(30) Priorität: 26.11.2013 DE 102013019672; 04.11.2014 DE 102014016157
(43) Veröffentlichungstag der Anmeldung: 03.06.2015
(73) Patentinhaber: Spitz, Heinrich, 51580 Reichshof (DE)
(72) Erfinder: Spitz, Heinrich, 51580 Reichshof (DE)
(74) Vertreter: Rebbereh, Cornelia

(56) Entgegenhaltungen:
- EP-A1- 0 061 335
- DE-A1- 3 151 581
- GB-A- 2 082 883
- NL-A- 7 311 660
- NL-A- 7 405 556
- US-A- 5 133 270

## Beschreibung

Die Erfindung betrifft eine Vorrichtung zum gezielten Ausbringen von Gut, insbesondere Streugut, wie Saatgut.

Vorrichtungen zum Ausbringen von Streugut, insbesondere Saatgut, sind im Stand der Technik bekannt. Das Ausbringen von Streugut, insbesondere Saatgut oder anderem Gut, kann durch unterschiedlichste Arten von Vorrichtungen erfolgen. Hierbei wird der Boden zunächst für das Säen und Ausbringen von Saatgut vorbereitet und gegebenenfalls Saatgutrillen im Boden vermittels Bodenbearbeitungselementen aufgerissen, in die nachfolgend das Saatgut eingebracht wird.

Gemäß der WO 98/57530 A2 wird mit Rechenelementen, die Saatgutausläufen zugeordnet sind, ein Saatbett bereitet und das Saatgut über die Rechenzinken und die Saatgutausläufe abgelegt. Die Rechenzinken drücken dabei grobes organisches Material zur Seite, um die Saatgutrillen freizuhalten. Mit einer nachfolgenden Räumvorrichtung, die in Form einer Stempelwalze mit Stempelelementen vorgesehen ist, wird sich zwischen den Rechenzinken ansammelndes Material beseitigt und von den Saatgutausläufen ferngehalten. Die Rechenzinken bzw. Nivellierelemente verhindern ein Verstopfen mit organischem Material. Räumelemente bzw. Stempelelemente, die in Umfangsrichtung nachgiebig ausgebildet sind, wirken mit einem Festanschlag zusammen, um eine Beschädigung beim Auftreffen auf ein Hindernis zu vermeiden. Zwischen jeweils zwei rotierenden Stempelelementen ist ein feststehendes Nivellierelement angeordnet, das auf den Boden einen Druck ausübt, um das Saatgut anzudrücken. Hiermit kann die Anzahl an Stempelelementen halbiert werden. Bekannt ist ferner das sogenannte Maisuntersaatverfahren, bei dem Untersaaten in Maisfruchtfolgen eingebracht werden. Dies erfolgt beispielsweise durch pneumatische Düngerstreuer, die in kniehohem Mais Grassamen ausbringen. Der Streukreis der Grassamen als Saatgut ist beim Verwenden eines Düngerstreuers naturgemäß sehr groß, so dass nicht gezielt das Saatgut lediglich in einem begrenzten Bereich, nämlich insbesondere in dem Bereich zwischen dem Mais, ausgebracht werden kann. Werden anstelle von Düngerstreuern lediglich Schlauchausläufe verwendet, ist auch über diese kein gezieltes Platzieren des Saatguts möglich, insbesondere in vordefinierten begrenzten Streifen von ausgebrachtem Saatgut bzw. eines der Saatgüter in einem vorbestimmten Streifen, da über diese nur ein großflächiges Verteilen möglich ist. Sollen also zwei unterschiedliche Saatgüter parallel zueinander ausgebracht werden, gegebenenfalls auch sequentiell, jedoch noch bevor das erste Saatgut eine deutlich wahrnehmbare Höhe erreicht hat, ist dies weder mit einem Düngerstreuer zum Ausbringen von Saatgut noch über Schlauchausläufe realisierbar.

Aus der NL 7311660 A ist ein Dosiergerät für pneumatisch arbeitende Verteilersysteme bei Vorrichtungen zum Verteilen von körnigem Gut, wie Saatgut, Dünger oder anderen Granulaten, mit einem am Vorratstrichter anschließenden, mit Einlauftrichter versehenen Dosiergerät und einer an das Dosiergerät anschließenden Luftzuführung, die in die Transportleitung für das dosierte Gut mündet, durch die das Gut den eigentlichen Verteilern aufgegeben wird, bekannt. Hierbei ist eine umlaufend bewegte, runde Wanne mit einem schräg abfallenden, eine zentrale Öffnung aufweisenden Mittelteil vorgesehen, an das sich die Ejektoreinheit ober- und unterhalb anschließt und einen ringförmigen Außenteil zur Aufnahme des Dosiergutes aufweist. Die Wanne ist mit einem Außenteil ausgerüstet und einem Mittelteil, der schräg nach innen abfällt. Außenteil und Mittelteil werden voneinander durch eine feststehende Trennwand getrennt, die mittels einer elastischen Abdichtungslippe auf die Oberseite des Bodens des Außenteils greift. In eine zentrale Öffnung des schräg abfallenden Mittelteils 6 mündet eine Ejektoreinheit, die aus einer Fangdüse und einem Erweiterungsstück besteht und durch die Luft für das Verteilersystem geführt wird. An das untere Ende des Erweiterungsstücks schließt sich ein Kragen an, der höhenverstellbar ausgebildet ist und dadurch zwischen seine Unterkante und der Oberseite des Bodens des Mittelteils 6 eine definierte Durchflussöffnung, die ringförmig gestaltet ist, schafft. Über dem Boden des umlaufenden Außenteils sind feststehende Abweiserwände angeordnet, die das Gut zu in der Trennwand vorgesehenen Austrittsöffnungen leiten. Die Abweiserwände sind mit Luftdurchtrittsöffnungen versehen, die im Bereich des Förderguts mit Abweiserschürzen versehen sind.

Durch die Luftaustrittsöffnungen wird Luft entgegengerichtet der Förderrichtung des Gutstroms eingeblasen, so dass hier ein Stauen des Förderguts und des Dosierguts vermieden werden kann.

Der vorliegenden Erfindung liegt nun die Aufgabe zugrunde, eine Vorrichtung zum gezielten Ausbringen von Streugut, insbesondere Saatgut vorzusehen, mittels derer gezielt Streugut, wie Saatgut, in einem definierten Bereich ausgebracht werden kann, so dass ein paralleles Ausbringen unterschiedlicher Güter, wie Saatgüter, mit Abstand zueinander oder auch ein sequentielles Ausbringen von Gut, wie Saatgut, an unterschiedlichen definierten Stellen auf einem Boden möglich ist.

Die Aufgabe wird für eine Vorrichtung zum gezielten Ausbringen von rieselfähigem Streugut, wie Saatgut, mit den Merkmalen des Anspruchs 1 gelöst. Weiterbildungen der Erfindung sind in den abhängigen Ansprüchen definiert.

Dadurch wird eine Vorrichtung zum Ausbringen von Streugut bzw. Gut, wie Saatgut, vorgesehen, mittels derer ein gezieltes und flächig begrenztes gleichmäßiges Ausbringen des Guts bzw. Saatguts möglich ist. Das Gut wird der Gut-Ausbringeinrichtung über eine Gut-Zuführeinrichtung zugeführt, wobei das Gut in einem Gut-Vorratsbehälter bevorratet werden kann, der mit der Gut-Zuführeinrichtung verbunden ist. In der Gut-Ausbringeinrichtung ist die Verwirbelungseinrichtung angeordnet, wobei das in der Gut-Ausbringeinrichtung eintreffende Gut vorteilhaft direkt in die Verwirbelungseinrichtung gelangt. Die Verwirbelungseinrichtung dient dazu, das Gut innerhalb des Gehäuses der Gut-Ausbringeinrichtung zu verwirbeln und hierdurch über den Querschnitt des Gehäuses und auch die Führungsfläche des Gehäuses, die eine Zylinderfläche ist, zu verteilen. Geführt von der Führungsfläche bewegt sich das Gut entlang der Führungsfläche zu der Austrittsöffnung des Gehäuses der Gut-Ausbringeinrichtung, wird also nach Auftreffen auf der Führungsfläche dort umgelenkt und bezüglich seines Streukreises begrenzt, so dass es in diesem begrenzten Bereich auf einen Boden bzw. Ackerboden auftreffen kann, über dem die Vorrichtung angeordnet wird. Hierdurch ist es somit insbesondere möglich, z.B. bei Untersaaten in Mais, bestimmtes Saatgut, wie Grassaat, lediglich in dem Zwischenraum zwischen der ausgelegten oder auszulegenden Maissaat auszubringen. Es wird somit ein ausreichender Abstand zwischen den Maissaatreihen und der Untersaat, der beispielsweise etwa 20 cm betragen kann, eingehalten, so dass eine Wachstumskonkurrenz zwischen Untersaat und Maissaat aufgrund des gezielten Ausbringens der Untersaat vermieden werden kann. Vermittels der Vorrichtung ist somit ein flächig begrenztes und gleichmäßiges Ausbringen eines bestimmten Guts, wie eines Saatguts, möglich, sogar während des Ausbringens eines anderen Guts parallel dazu, wobei selbstverständlich auch ein sequentielles Ausbringen verschiedener Güter möglich ist, z.B. von Grassaat und Maissaat.

Unter Gut oder Streugut wird streufähiges Gut verstanden, das rieselfähig ist, wie z.B. Gräser-Saatgut, so dass es aus der zumindest einen Austrittsöffnung der Gut-Ausbringeinrichtung herausrieseln kann. Die zumindest eine Austrittsöffnung des Gehäuses der Gut-Ausbringeinrichtung ist üblicherweise eine untere Austrittsöffnung, die zum Austritt des Guts dient und die im Betriebszustand bzw. in der Betriebsposition der Gut-Ausbringeinrichtung dementsprechend zumindest schräg nach unten zu einem Boden bzw. Ackerboden gerichtet sein kann.

Selbstverständlich kann auch z.B. ein etwa senkrecht nach unten gerichteter Austritt erfolgen.

Die Verwirbelungseinrichtung umfasst zumindest ein Prallblech zum Umlenken und Reduzieren der Bewegungsgeschwindigkeit des Guts. Hierdurch ist es möglich, in Kombination mit der zumindest einen Führungsfläche des Gehäuses der Gut-Ausbringeinrichtung nach dem Verwirbeln des Guts dieses langsam aus der Gut-Ausbringeinrichtung herabrieseln zu lassen über der durch das Gehäuse der Gut-Ausbringeinrichtung begrenzten Fläche auf den Boden oder Ackerboden unterhalb der Gut-Ausbringeinrichtung. Um eine möglichst effektive Verwirbelung zu erhalten, ist zumindest eine Einrichtung zum Beschleunigen des Guts, insbesondere Saatguts, vorgesehen und mit der Verwirbelungseinrichtung gekoppelt. Die Einrichtung zum Beschleunigen des Guts ist ein Luftstrom, mittels dessen das Gut transportiert wird bzw. transportiert werden kann. Vermittels eines solchen Luftstroms wird das in einem Gut-Vorratsbehälter bevorratete Gut durch die Gut-Zuführeinrichtung hindurch zu der Gut-Ausbringeinrichtung transportiert. Das dementsprechend mit hoher Geschwindigkeit in die Gut-Ausbringeinrichtung eintretende Gut, wie Saatgut, prallt auf das eine Prallblech der Verwirbelungseinrichtung auf und wird hierdurch in seiner Bewegung umgelenkt und dabei abgebremst. Die Umlenkung erfolgt in Richtung eines zweiten, etwa parallel zu dem ersten Prallblech angeordneten Prallblechs, von dort zu der zumindest einen Führungsfläche des Gehäuses der Gut-Ausbringeinrichtung, die im Wesentlichen senkrecht zu dem oder den Prallblechen angeordnet sein kann, so dass das umgelenkte Gut insbesondere etwa senkrecht auf die Führungsfläche des Gehäuses der Gut-Ausbringeinrichtung auftrifft. Von hier gelangt es mit reduzierter Geschwindigkeit zur unteren Austrittsöffnung des Gehäuses der Gut-Ausbringeinrichtung. Dementsprechend rieselt das Gut nachfolgend auf die durch die Abmessungen der Austrittsöffnung vorbestimmte unter der Vorrichtung befindliche Bodenfläche.

Als weiter vorteilhaft erweist es sich, wenn die Verwirbelungseinrichtung in der Seitenansicht T-förmig oder aber L-förmig ist. Hierbei werden zwei Prallbleche vorgesehen, ein in der Betriebsposition erstes oberes Prallblech und ein in der Betriebsposition zweites unteres Prallblech, wobei das mit hoher Geschwindigkeit in die Verwirbelungseinrichtung eintretende Gut zunächst auf das untere zweite Prallblech auftrifft, nach dem Abprallen von diesem ggf. gegen das obere erste Prallblech stößt und nachfolgend sich radial nach außen bewegt, also quer bzw. etwa senkrecht zur Erstreckung der Prallbleche sich in Richtung der zumindest einen Führungsfläche des Gehäuses der Gut-Ausbringeinrichtung bewegt. Durch das mehrfache Umlenken der Bewegungsrichtung des Guts wird dieses verwirbelt und in seiner Geschwindigkeit abgebremst. Die beiden Prallbleche bzw. bei Verwenden nur eines Prallblechs dieses eine Prallblech können tellerförmig, kreisförmig oder kreissegmentförmig sein.

Bei Verwenden von zumindest zwei Prallblechen können diese etwa parallel zueinander angeordnet sein, wobei sie fluchtend übereinander oder versetzt zueinander angeordnet sein bzw. unterschiedliche Abmessungen aufweisen können. Hierdurch kann z.B. das obere erste Prallblech gegenüber dem unteren zweiten Prallblech einen größeren Bereich überdecken, um das Gut daran zu hindern, sich nach oben in einen über dem oberen Prallblech befindlichen Teil des Gehäuses hinein zu bewegen, wo es sich auf dem oberen Prallblech ablagern könnte, anstatt an den seitlichen Führungsflächen des Gehäuses herab zu rieseln. Das Gut wird somit vielmehr in eine Richtung nach unten zu der Austrittsöffnung gelenkt, so dass es durch die untere Austrittsöffnung des Gehäuses der Gut-Ausbringeinrichtung austreten kann.

Als weiter vorteilhaft erweist es sich, benachbart zu der Gut-Ausbringeinrichtung zumindest ein an der Vorrichtung auslenkbar befestigtes und/oder federnd ausgebildetes Rechenelement vorzusehen. Ein solches kann ein oder mehrere Rechenzinken umfassen. Das Rechenelement kann an einer Halteeinrichtung befestigt sein, die ihrerseits an der Vorrichtung zum gezielten Ausbringen des Guts bzw. einem Rahmen von dieser befestigt sein kann. Die Befestigung des Rechenelements an der Halteeinrichtung und/oder der Halteeinrichtung, insbesondere eines Gestänges, an der Vorrichtung bzw. deren Rahmen kann gelenkig erfolgen, so dass ein Auslenken bzw. Ausschwenken gegenüber der Vorrichtung bzw. deren Rahmen möglich ist. Bei Überfahren von Bodenunebenheiten kann somit nicht nur der Rahmen der Vorrichtung durch Bewegen seiner Elemente gegeneinander, beispielsweise von in der Geometrie eines Parallelogramms angeordneten Elementen, sich an die Bodenunebenheiten anpassen, sondern auch der Halteeinrichtung des Rechenelements gegenüber dem Rahmen der Vorrichtung ausschwenken und hierdurch Bodenunebenheiten aufnehmen, so dass das Rechenelement sich stets auf der Bodenfläche aufstützt, um das Gut in diese einarbeiten zu können. Bei Überfahren von Bodenunebenheiten wird die Halteeinrichtung gegenüber dem Rahmen der Vorrichtung ausgelenkt und hierdurch das Rechenelement ebenfalls angehoben bzw. abgesenkt, je nach Anordnung am Rahmen der Vorrichtung.

Die Rechenzinken können federnd an dem Rechenelement bzw. der Halteeinrichtung befestigt sein, die ihrerseits an der Vorrichtung zum Ausbringen von Gut, wie Saatgut, befestigt ist. Beispielsweise können die einzelnen Rechenzinken des zumindest einen Rechenelementes selbst endseitig federnd, insbesondere schraubenfederartig, ausgebildet und dort an der Halteeinrichtung befestigt sein. Durch das federnde Ausbilden bzw. Befestigen ist es möglich, die Rechenzinken des zumindest einen Rechenelementes unter federndem Anliegen an dem Boden über diesen gleiten zu lassen und hierbei das Gut, wie Saatgut, das über die Gut-Ausbringeinrichtung auf den Boden ausgebracht wurde, einzuarbeiten. Eventuelle Bodenunebenheiten überfährt das zumindest eine Rechenelement unter Einlenken/Einschwenken der Halteeinrichtung gegenüber dem Rahmen der Vorrichtung und unter Einfedern der Rechenzinken, wobei es aufgrund seines Eigengewichts mit einer vorbestimmten oder vorbestimmbaren Kraft auf den Boden drückt, um das Gut einzuarbeiten, wobei die einzelnen Rechenzinken des zumindest einen Rechenelementes bei Bodenunebenheiten jeweils mit der vorbestimmten Kraft gegen den Boden drücken und somit ein gleichmäßiges Einarbeiten des Guts, wie Saatgut, in den Boden ermöglichen.

Anstelle eines sich durchgängig über die gesamte Breite der Vorrichtung erstreckenden Rechenelements können vorteilhaft mehrere Rechenelemente vorgesehen sein, die sich jeweils über eine begrenzte vorbestimmbare Breite erstrecken, die an die Breite von Streifen angepasst ist, in denen das Gut auf den Boden ausgebracht werden soll. Durch Vorsehen einer Anzahl von Rechenelementen, die jeweils schwenkbar bzw. auslenkbar an dem Rahmen der Vorrichtung angebracht sind, können diese noch besser sich an Bodenunebenheiten anpassen bzw. diese aufnehmen als dies bei einem durchgehenden Rechenelement möglich wäre.

Weiter vorteilhaft kann benachbart zu der Gut-Ausbringeinrichtung zumindest eine an der Vorrichtung auslenkbar befestigte und/oder federnd gelagerte Einrichtung zum Aufbringen einer andrückenden und/oder ebnenden Druckkraft auf die Bodenfläche, auf die das Gut auszubringen ist/ausgebracht wird, vorgesehen sein oder werden. Die Einrichtung kann insbesondere zumindest ein Rad, zumindest eine Rolle, zumindest eine Walze etc. sein. Die Einrichtung dient dem Ebnen und Andrücken der Bodenfläche, auf die das Gut, insbesondere Saatgut, aufgebracht werden soll. Durch das Andrücken können Erdklumpen zerdrückt werden. Durch Zuschütten von kleineren Klüften des Bodens bzw. der Bodenfläche erfolgt ein Einebnen. Hierdurch wird vorteilhaft erreicht, dass das auf die Bodenfläche aufgebrachte Gut bzw. Saatgut nicht in Klüfte fällt, sondern auf der Oberfläche liegen bleibt und hierdurch besser keimen und wachsen kann. Auch kann natürlich auf der geschaffenen geebneten und angedrückten Fläche das gezielte Ausbringen des Guts weiter erleichtert werden. Vorteilhaft ist die zumindest eine Einrichtung, wie das zumindest eine Rad, die zumindest eine Walze oder die zumindest eine Rolle, so an der Vorrichtung zum gezielten Ausbringen von Gut angeordnet, dass sie in späterer Bewegungsrichtung der Vorrichtung vor der Gut-Ausbringeinrichtung angeordnet ist. Dementsprechend sind die zumindest eine Einrichtung zum Aufbringen einer Druckkraft auf die Bodenfläche, die Gut-Ausbringeinrichtung und das zumindest eine Rechenelement hintereinander bzw. in Reihe angeordnet. Hierdurch ist es möglich, zunächst die Bodenfläche in Bewegungsrichtung vor der Gut-Ausbringeinrichtung anzudrücken und zu ebnen, nachfolgend über die Gut-Ausbringeinrichtung das Gut, insbesondere Saatgut, auf die angedrückte und geebnete Bodenfläche gezielt aufzubringen und im Anschluss daran das Gut in die Bodenfläche bzw. den Boden einzuarbeiten.

Jeder Gut-Ausbringeinrichtung kann zumindest eine Einrichtung zum Andrücken und Ebnen der Bodenfläche bzw. des Bodens, auf die/den das Gut aufgebracht werden soll, wie zumindest eine Rolle, zumindest ein Rad bzw. zumindest eine Walze, zugeordnet sein. Dementsprechend können bei vier Gut-Ausbringeinrichtungen vier derartige Einrichtungen zum Aufbringen einer Druckkraft auf die Bodenfläche, wie Rollen, Räder, Walzen, walzenartige Einrichtungen etc. vorgesehen sein. Ebenso ist es aber auch möglich, einer Gut-Ausbringeinrichtung mehr als eine Einrichtung zum Aufbringen einer Druckkraft auf die Bodenfläche zuzuordnen oder eine Einrichtung zum Aufbringen einer Druckkraft mehr als einer Gut-Ausbringeinrichtung zuzuordnen.

Vorteilhaft ist zumindest ein Federelement zum insbesondere kontinuierlichen Aufbringen einer Druckkraft auf die Einrichtung zum Aufbringen einer Druckkraft auf die Bodenfläche vorgesehen. Die Einrichtung zum Aufbringen einer Druckkraft auf die Bodenfläche kann beispielsweise an einem Ende eines gelenkig gelagerten Stangenelements angeordnet sein, während das zumindest eine Federelement einerseits an dem anderen Ende des Stangenelements und andererseits an der Vorrichtung bzw. einem Rahmen von dieser befestigt ist, um eine Druck-Vorspannung auf das Ende des Stangenelements, an dem die Einrichtung zum Andrücken und Ebnen der Bodenfläche bzw. Aufbringen einer Druckkraft auf diese angeordnet ist, aufzubringen, diese hierüber somit federnd zu lagern. Durch das Anordnen der Einrichtung zum Aufbringen einer Druckkraft auf die Bodenfläche und des zumindest einen Federelements auf einander gegenüberliegenden Seiten eines Gelenkpunktes entlang dem Stangenelement, um welchen dieses schwenkbar gelagert ist, kann über das zumindest eine Federelement kontinuierlich eine Druckkraft auf die Einrichtung und über diese auf die Bodenfläche ausgeübt werden, um diese beim Überstreichen bzw. Überfahren anzudrücken und zu ebnen, bevor durch die Gut-Ausbringeinrichtung Gut, insbesondere Saatgut, auf die Bodenfläche ausgebracht wird.

Die Vorrichtung zum gezielten Ausbringen von Gut kann beispielsweise mit zumindest einem Rad zum Verfahren der Vorrichtung versehen werden. Ggf. kann sie selbst mit einer Antriebseinrichtung versehen sein. Ferner ist es möglich, die Vorrichtung an ein Fahrzeug, wie beispielsweise ein landwirtschaftliches Fahrzeug, rückwärtig oder frontseitig anzuhängen bzw. an diesem zu befestigen, um die Vorrichtung mittels dessen zu verfahren. Es kann z.B. lediglich ein Gut-Vorratsbehälter oder es können auch mehrere vorgesehen werden, wobei von dem oder den Gut-Vorratsbehälter(n) jeweils Gut-Zuführeinrichtungen zu den endseitig an diesen angeordneten Gut-Ausbringeinrichtungen führen, um das Gut der jeweiligen Gut-Ausbringeinrichtung zuzuführen. Die Gut-Ausbringeinrichtung kann über eine Halteeinrichtung bezüglich ihrer Position fixiert an der Vorrichtung zum gezielten Ausbringen von Gut bzw. deren Rahmen gehalten werden. Benachbart zu dieser Halteeinrichtung für die Gut-Ausbringeinrichtung kann, insbesondere befestigt an dieser, das zumindest eine Rechenelement angeordnet werden. Die Halteeinrichtung der Gut-Ausbringeinrichtung kann direkt an dem Rahmen der Vorrichtung befestigt sein, so dass ggf. ein Verschwenken über diesen möglich ist, sofern der Rahmen der Vorrichtung dementsprechend zum Ausgleichen von Bodenunebenheiten ausgebildet ist.

Die Vorrichtung zum gezielten Ausbringen von Gut kann ferner Teil einer Vorrichtung zum Ausbringen von Gut sein, über die ein weiteres Gut, wie Maissaat oder anderes, ausgebracht wird. Ferner kann die Vorrichtung zum gezielten Ausbringen von Gut zumindest eine weitere Vorrichtung oder Einrichtung zum Ausbringen zumindest eines zweiten Guts umfassen. In jedem der Fälle kann das zumindest eine weitere Gut parallel zu dem gezielten Ausbringen des ersten Guts ausgebracht werden oder die Güter können sequentiell ausgebracht werden. Gerade beim parallelen Ausbringen der Güter eignet sich eine Anordnung, bei der z.B. zum Ausbringen des weiteren Guts, wie von Maissaat, separate Gut-Vorratsbehälter vorgesehen und deren Auslässe bzw. Auslasseinrichtungen zum Ausbringen des Guts zwischen den Gut-Ausbringeinrichtungen der Vorrichtung zum gezielten Ausbringen des ersten Guts angeordnet sind. Hierdurch kann das Gut, das gezielt ausgebracht werden soll, gezielt zwischen den Reihen mit dem zumindest einen anderen Gut ausgebracht werden, wie beispielsweise Grassaat gezielt zwischen Maissaatreihen. Vorteilhaft sind die Gut-Ausbringeinrichtungen mit einem festen, also gleichbleibenden, Abstand zueinander angeordnet, so dass das eine Gut in Streifen oder Reihen mit einem vorbestimmbaren oder vorgegebenen festen Abstand zwischen den Reihen des zumindest einen anderen Guts ausgebracht wird bzw. werden kann. Auch die jeweils zum Andrücken des Bodens bzw. Aufbringen einer Druckkraft auf die Bodenfläche vorgesehenen Räder, Walzen, Rollen etc. sind vorteilhaft in einem festen Abstand zueinander angeordnet, der weiter vorteilhaft dem Abstand der Gut-Ausbringeinrichtungen zueinander entspricht.

Weiter vorteilhaft kann als ein Gut bzw. Saatgut beispielsweise Maissaat und als weiteres Gut bzw. Saatgut Rotschwingel-Untersaat vorgesehen werden. Um zu verhindern, dass sich weitere Pflanzen dort ansiedeln, die sich ggf. negativ auf das Wachstum beider Güter bzw. den Ertrag insbesondere der Maissaat auswirken, können Herbizide eingesetzt werden, die dahingehend abgestimmt sind, dass nur solche Pflanzen bekämpft werden, die weder als primäres Saatgut (hier z.B. Maissaat) noch als Untersaatgut (hier z.B. Rotschwingel) vorgesehen sind, somit dafür sorgen, dass beispielsweise Maissaat und Untersaat Rotschwindel geschont und nicht geschädigt werden. Es können vorteilhaft Pflanzenschutzmittel bzw. Herbizide verwendet werden, die ferner das Wachstum von Maissaat und Untersaat in Form von Rotschwingel fördern.

Weiter vorteilhaft weisen die Herbizide eine Wirkstoffkombination auf, insbesondere eine Wirkstoffkombination aus Pendimethalin, Sulcotrion und Bromoxynil. Pendimethalin wird z.B. unter dem Handelsnamen Activus vertrieben oder auch unter dem Handelsnamen Stamp Aqua oder Inno Protect Pendi 400 SC. Sulcotrion wird z.B. unter dem Handelsnamen Sulcogan oder dem Handelsnamen Mikado vertrieben. Bromoxynil wird z.B. unter dem Handelsnamen Buctril oder Sarbel oder Eclat oder Certrol B oder dem Handelsnamen Caracho angeboten und vertrieben. Anstelle von Sulcotrion kann auch der Wirkstoff Topramezone verwendet werden, der unter dem Handelsnamen Clio vertrieben wird. Dieser Wirkstoff kann zusammen mit einem Hilfsstoff, insbesondere einem Emulsionskonzentrat (EC) verwendet werden. Bei dem unter der Bezeichnung Clio angebotenen Topramezone kann dies der Hilfsstoff mit dem Handelsnamen DASH E.C. sein, der von der Firma BASF angeboten und vertrieben wird.

Das Produkt unter dem Handelsnamen Activus beinhaltet 400 g/kg Pendimethalin. Das Produkt unter dem Handelsnamen Sulcogan beinhaltet 300 g/l Sulcotrion. Das Produkt unter dem Handelsnamen Buctril beinhaltet 225 g/l Bromoxynil bzw. als Octansäureester 327,5 g/l. Das Produkt unter dem Handelsnamen Clio umfasst 336 g/l Topramezone. Der ggf. vorgesehene Hilfsstoff, wie der unter dem Handelsnamen DASH, ist ein Hilfsmittel zum Erleichtern des Eintritts des Pflanzenschutzmittels in die jeweilige Pflanze. Dieser Bestandteil kann ggf. auch weggelassen werden. Gerade die Kombination der vorstehend genannten Wirkstoffe Pendimethalin, Sulcotrion und Bromoxynil bzw. Pendimethalin, Topramezone und Bromoxynil führt zu einer optimalen Wirkung sowohl über den Boden als auch über das Blatt der Pflanze bei Maissaat und Rotschwingel-Untersaat. Beispielsweise kann ein einmaliges Spritzen mit der Kombination aus Activus, Sulcogan und Buctril bzw. Activus, Clio (mit DASH) und Buctril vorgesehen werden. Hierdurch kann die gewünschte vorteilhafte Wirkung auf die zu schützenden und zu unterstützenden Mais- und Rotschwingel-Pflanzen bereits erzielt werden. Beispielsweise können 1 bis 2,5 l/ha Activus, 0,5 bis 1 l/ha Sulcogan und 0,3 l/ha Buctril als Kombination verwendet werden oder 1 bis 2,5 l/ha Activus, 0,1 bis 0,15 l/ha Clio mit DASH E.C. und 0,3 l/ha Buctril. Die vorstehenden Angaben beziehen sich jeweils auf einen Hektar Ausbringfläche.

Zur näheren Erläuterung der Erfindung werden im Folgenden Ausführungsbeispiele von dieser näher anhand der Zeichnungen beschrieben. Diese zeigen in:
- Figur 1: eine seitliche Schnittansicht als Prinzipskizze einer erfindungsgemäßen Gut-Ausbringeinrichtung mit daran angeschlossener Gut-Zuführeinrichtung einer erfindungsgemäßen Vorrichtung zum gezielten Ausbringen von Gut, wie Saatgut,
- Figur 2: eine seitliche teilweise Schnittansicht der Gut-Ausbringeinrichtung gemäß Figur 1,
- Figur 3: eine Draufsicht und teilweise Querschnittsansicht der Gut-Ausbringeinrichtung gemäß Figur 1,
- Figur 4: eine Prinzipskizze einer erfindungsgemäßen Vorrichtung zum Ausbringen von Gut, umfassend vier erfindungsgemäße Gut-Ausbringeinrichtungen und diesen zugeordnete erfindungsgemäße Rechenelemente,
- Figur 5: eine Detailansicht der Vorrichtung gemäß Figur 4 im Bereich einer Gut-Ausbringeinrichtung und eines dieser zugeordneten Rechenelements,
- Figur 6: eine seitliche Schnittansicht als Prinzipskizze einer erfindungsgemäßen Gut-Ausbringeinrichtung mit daran angeschlossener Gut-Zuführeinrichtung und einer erfindungsgemäßen Verwirbelungseinrichtung mit nur einem Prallblech, und
- Figur 7: eine Detailansicht einer erfindungsgemäßen Vorrichtung zum Ausbringen von Gut, umfassend ein federnd gelagertes Rad zum Aufbringen einer Druckkraft auf eine Bodenfläche in Bewegungsrichtung vor einer Gut-Ausbringeinrichtung.

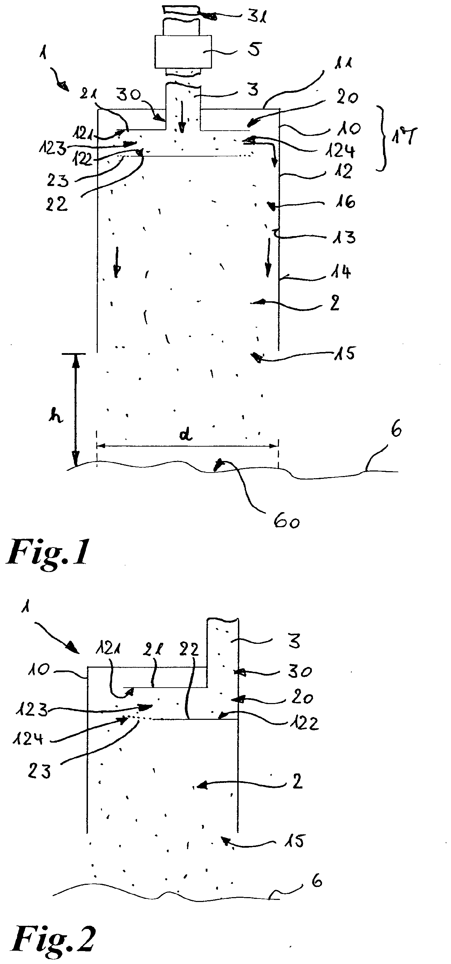

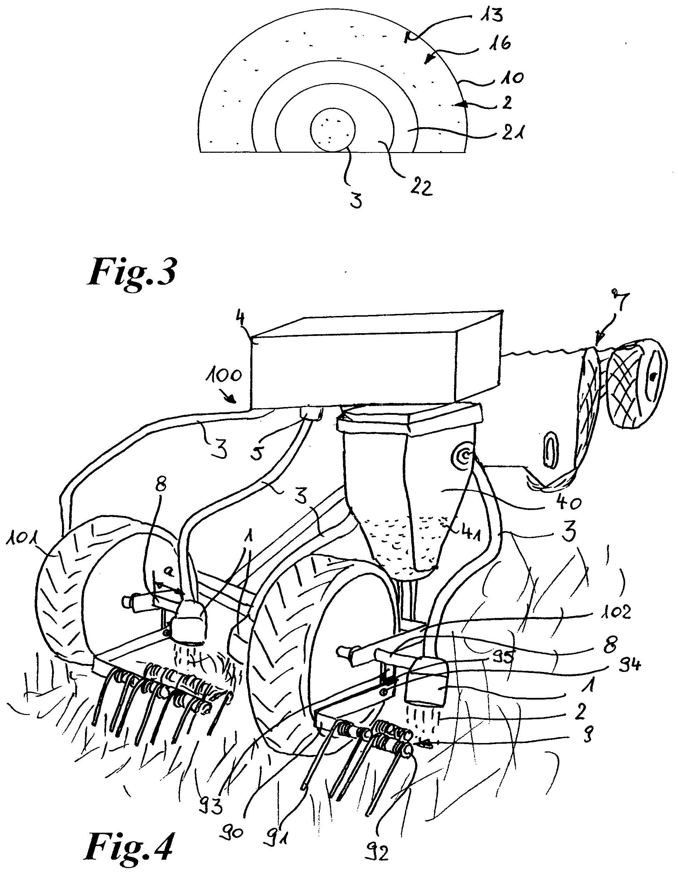

Figur 1 zeigt eine Längsschnittansicht einer Gut-Ausbringeinrichtung 1 mit einem Gehäuse 10 und mit einer Verwirbelungseinrichtung 20 zum Verwirbeln von Gut, wie Saatgut 2, wobei die Verwirbelungseinrichtung 20 im Inneren 16 des Gehäuses 10 der Gut-Ausbringeinrichtung 1 angeordnet ist. Das Gehäuse 10 der Gut-Ausbringeinrichtung 1 ist etwa zylindrisch und weist einen oberen geschlossenen Deckelteil 11, eine umlaufende zylindrische Wandung 12 mit einer Innenseite 13 und einer Außenseite 14 und eine untere Austrittsöffnung 15 auf. Die Verwirbelungseinrichtung 20 ist im Innern 16 des Gehäuses 10 in dessen oberen Teil 17 angeordnet und mit einer Gut-Zuführeinrichtung 3 in Form eines Schlauchs verbunden, wobei das Gehäuse 10 der Gut-Ausbringeinrichtung 1 endseitig an dem ersten Ende 30 an der schlauchförmigen Gut-Zuführeinrichtung 3 angeordnet ist. Die Gut-Zuführeinrichtung 3 ist an ihrem anderen bzw. zweiten Ende 31 mit einem Gut-Vorratsbehälter 4 verbunden, wie in Figur 4 angedeutet. In dem Gut-Vorratsbehälter 4 wird Gut, wie Saatgut, bevorratet. Die Gut-Zuführeinrichtung 3 ist ferner mit einer Beschleunigungseinrichtung für das Gut verbunden, wie beispielsweise einem Gebläse 5, das in Figur 1 lediglich angedeutet ist. Vermittels des Gebläses 5 wird Luft zum Transport des Guts eingeblasen, so dass das Gut 2 durch den bewegten kräftigen Luftstrom aus dem Gut-Vorratsbehälter 4 durch die Gut-Zuführeinrichtung 3 hindurch zur Gut-Ausbringeinrichtung 1 und darin zur Verwirbelungseinrichtung 20 transportiert werden kann.

Die Verwirbelungseinrichtung 20 umfasst in der in Figur 1 bis 3 gezeigten Ausführungsform zwei Prallbleche 21, 22, die etwa parallel zueinander und etwa senkrecht zu der Gut-Zuführeinrichtung 3 an deren Ende 30 angeordnet sind. Beide Prallbleche 21, 22 sind etwa tellerförmig, wie der Draufsicht auf diese nach Figur 3 entnommen werden kann. Allerdings sind sie in der hier gezeigten Ausführungsvariante nicht vollständig rund, sondern als Kreissegmente ausgebildet und versetzt zueinander angeordnet, was insbesondere den Figuren 1 bis 3 ebenfalls entnommen werden kann. Es ist jedoch ebenfalls möglich, vollständig kreisförmige, also tellerförmige, Prallbleche vorzusehen. Ferner können diese auch fluchtend übereinander angeordnet werden, also etwa denselben Durchmesser aufweisen, was in Figur 1 und 2 durch gepunktete Linien 23 angedeutet ist. Ferner kann nicht nur das Prallblech 21 größer als das Prallblech 22 ausgebildet sein, sondern auch umgekehrt das Prallblech 22 größer als das Prallblech 21.

Aufgrund des etwa rechtwinkligen Anordnens der beiden Prallbleche 21, 22 gegenüber dem in dem Gehäuse 10 der Gut-Ausbringeinrichtung 1 angeordneten Ende 30 der Gut-Zuführeinrichtung 3 entsteht eine L-Form der Verwirbelungseinrichtung 20 in der Seitenansicht, wie Figur 2 entnommen werden kann. Ferner überdeckt das obere Prallblech 21 eine größere Fläche als das untere Prallblech 22, so dass das Gut 2 in Richtung zu der unteren Austrittsöffnung 15 des Gehäuses 10 der Gut-Ausbringeinrichtung 1 gelenkt werden kann. Bevor jedoch das Gut 2, das aus der Verwirbelungseinrichtung 20 austritt, zur unteren Austrittsöffnung 15 des Gehäuses 10 der Gut-Ausbringeinrichtung 1 gelangt, prallt es zunächst gegen die Oberseite 122 des unteren Prallblechs 22 und wird hierdurch gegenüber der Bewegungsgeschwindigkeit in der Gut-Zuführeinrichtung 3 abgebremst und bezüglich seiner Bewegungsrichtung umgelenkt. Dadurch prallt zumindest ein Teil des Guts 2 anschließend gegen die Unterseite 121 des oberen Prallblechs 21 und wird dort weiter abgebremst und erneut umgelenkt. Ggf. prallt ein Teil des umgelenkten Guts 2 erneut gegen die Oberseite 122 des unteren Prallblechs 22 und wird dort weiter abgebremst und umgelenkt. Von dort kann wiederum ein Teil des Guts 2 gegen die Unterseite 121 des oberen Prallblechs 21 prallen und erneut umgelenkt und weiter abgebremst werden. Dieser Vorgang setzt sich fort, bis das Gut 2 den Zwischenraum 123 zwischen den beiden Prallblechen 21, 22 in dem hier umlaufenden Austrittsbereich 124 verlässt und seine Bewegung in Richtung der Innenseite 13 des Gehäuses 10 fortsetzt. Durch die beiden parallel angeordneten Prallbleche 21, 22 der Verwirbelungseinrichtung 20 wird das Gut 2 somit zu der Innenseite 13 des Gehäuses 10 geführt. Die Innenseite 13 des Gehäuses 10 dient als Führungsfläche für das Gut, z.B. Saatgut 2, um dieses in Richtung zu der unteren Austrittsöffnung 15 zu leiten. Es rieselt dadurch in dem Gehäuseinneren 16 nach unten zur unteren Austrittsöffnung 15 und dort hinaus auf eine Fläche, wie einen Boden bzw. Ackerboden 6 unterhalb der Gut-Ausbringeinrichtung 1. Dadurch, dass das Gut 2 herabrieselt, verteilt es sich nicht ungewollt über eine große Fläche, sondern fällt gezielt auf eine durch den Durchmesser d der unteren Austrittsöffnung 15 und die Höhe h über der Bodenfläche 6 begrenzte Fläche 60.

Das durch die Beschleunigungseinrichtung, in Form beispielsweise eines beschleunigten Luftstroms, beschleunigte Gut 2 gelangt somit durch die Gut-Zuführeinrichtung 3 hindurch in die Verwirbelungseinrichtung 20 hinein. In dieser wird es durch Umlenken und Prallen an die beiden etwa parallel zueinander angeordneten Prallbleche 21, 22 verwirbelt und gelangt nachfolgend aus dem Zwischenraum 123 zwischen den beiden Prallblechen 21, 22 heraus und stößt gegen die Innenseite bzw. Führungsfläche 12 des Gehäuses 10 der Gut-Ausbringeinrichtung 1. Das Gut 2 kann auf die Innen- bzw. Führungsfläche 13 etwa senkrecht aufprallen oder auch in einem anderen Winkel, je nach dem, in welchem Winkel das Gut 2 aus dem Zwischenraum 123 austritt. Entlang der Führungsfläche 12 fällt das Gut 2 nach unten in Richtung der unteren Austrittsöffnung 15 des Gehäuses 10 und aus dieser heraus auf die Bodenfläche 6, die unter der Gut-Ausbringeinrichtung 1 angeordnet ist. Durch das die Verwirbelungseinrichtung 20 in sich aufnehmende Gehäuse 10 kann das sonst aufgrund der Prallbleche 21, 22 breit über einen großen Bereich sich verteilende Gut 2 so gelenkt werden, dass es lediglich über den Durchmesser der Austrittsöffnung 15 des Gehäuses 10 aus diesem austritt.

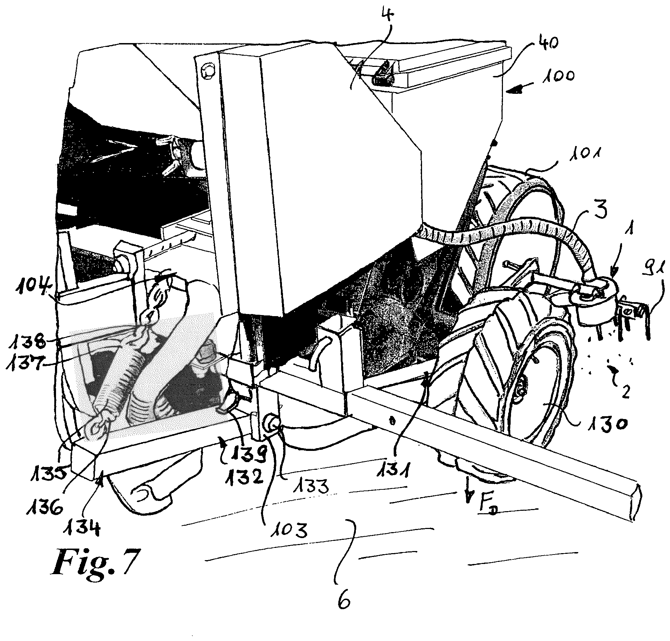

In Figur 4 ist eine die Gut-Ausbringeinrichtung 1 umfassende Vorrichtung 100 gezeigt, die außer vier Gut-Ausbringeinrichtungen 1 und diesen zugeordneter Gut-Zuführeinrichtungen 3 einen zentral angeordneten Gut-Vorratsbehälter 4 mit dem Gut 2 und einen weiteren Gut-Vorratsbehälter 40 mit einem anderen Gut 41 umfasst. Die Gut-Ausbringeinrichtung 1 ist mit einem festen Abstand zu einer Ausbringeinrichtung angebracht, mit der das Gut 41 ausgebracht wird, so dass das Gut 2 in Streifen mit einem vordefinierten bzw. vorgebbaren festen Abstand zwischen Reihen des Guts 41 ausgebracht wird. Z.B. ist Gut 2 Grassaat und Gut 41 Maissaat. Ferner weist die Vorrichtung 100 Räder 101 auf, mittels derer das Gut 41 angedrückt werden kann. Wie aus Figur 7 hervorgeht, können neben den Rädern 101 auch Räder 130 vorgesehen sein, mittels derer die Bodenfläche 6 vor dem Ausbringen des Guts 2 angedrückt und geebnet werden kann, also bevor das Gut 2 durch die Gut-Ausbringeinrichtung 1 auf die Bodenfläche 6 ausgebracht wird. Die Räder 130 und 101 sind vorteilhaft in dem gleichen Abstand zueinander angeordnet, wie die Gut-Ausbringeinrichtung 1 zu der Ausbringeinrichtung, die das Gut 41 ausbringt. Die Räder 130 dienen dem Ausüben einer Druckkraft F_{D} auf die Bodenfläche 6 und hierüber dem Andrücken und Ebnen von dieser zum Zerdrücken von Erdklumpen und Zuschütten von Klüften. Wie Figur 7 weiter zu entnehmen ist, ist das eine dort dargestellte Rad 130 der seitlich an der Vorrichtung 100 vorgesehenen Gut-Ausbringeinrichtung 1 zugeordnet. Das Rad 130 ist an einem ersten Ende 131 eines schwenkbar am Rahmen der Vorrichtung 100 angeordneten Stangenelements 132 drehbar gelagert. Das Stangenelement 132 ist um ein Drehgelenk 133 schwenkbar an einem Rahmenteil 103 der Vorrichtung 100 gelagert. An dem Rahmenteil 103 ist ferner ein Anschlagelement 139 vorgesehen, das einen Anschlag bezüglich der Verschwenkbarkeit des Stangenelements 132 gegenüber dem Rahmenteil 103 schafft. An dem zweiten Ende 134 des Stangenelements 132 ist ein Federelement 135 mit einem Ende 136 befestigt. Mit seinem anderen Ende 137 ist das Federelement 135 an einem weiteren Rahmenteil 104 der Vorrichtung 100 festgelegt. Die Befestigung erfolgt hier nicht direkt, sondern über eine Kette 138, die ihrerseits an dem Rahmenteil 104 der Vorrichtung 100 befestigt ist. Durch diese Art einer indirekten Befestigung über die in sich bewegliche und zugleich stabile Kette 138 kann eine Beweglichkeit und zugleich eine ausreichende Widerstandsfähigkeit gegenüber im Betrieb auftretenden Belastungen für die Befestigung des Federelements 135 vorgesehen werden. Anstelle der Verwendung einer Kette kann das Federelement 135 auch durch ein anderes bewegliches und zugleich ausreichende Stabilität aufweisendes Element an dem Rahmenteil 104 der Vorrichtung 100 befestigt werden, ggf. auch direkt, also ohne Zwischenfügen eines solchen Elements, z.B. durch Einhängen des zweiten Endes 137 des Federelements 135 in einen Ring oder ähnliches an dem Rahmenteil 104 der Vorrichtung 100.

Zum Bewegen der Vorrichtung 100 über die Bodenfläche 6 können weitere Räder vorgesehen werden. Um die Vorrichtung zu bewegen, kann sie an ein landwirtschaftliches Fahrzeug 7 rückwärtig angehängt werden, wie in Figur 4 ebenfalls angedeutet. Alternativ könnte sie frontseitig an das Fahrzeug 7 angehängt werden oder die Vorrichtung selbst als selbstfahrbares Fahrzeug ausgebildet sein. Ebenfalls ist es möglich, die Vorrichtung 100 ohne Räder, jedoch anhängbar an ein Fahrzeug auszubilden, wobei auch bei einer solchen Ausbildung ein Verfahren der Vorrichtung 100 über eine Bodenfläche problemlos möglich ist. Benachbart zu den Rädern 101 ist ein jeweiliges Halteelement 8 vorgesehen, das bügelartig ist und dem Halten der Gut-Ausbringeinrichtungen 1 in einem durch die Abmessungen des Halteelements 8 bestimmten Abstand a zu dem Rad 101 dient. Das Halteelement 8 ist hier an einem Rahmenteil 102 der Vorrichtung 100 befestigt. Es kann jedoch auch an einer anderen Stelle der Vorrichtung befestigt bzw. mit dieser fest verbunden werden.

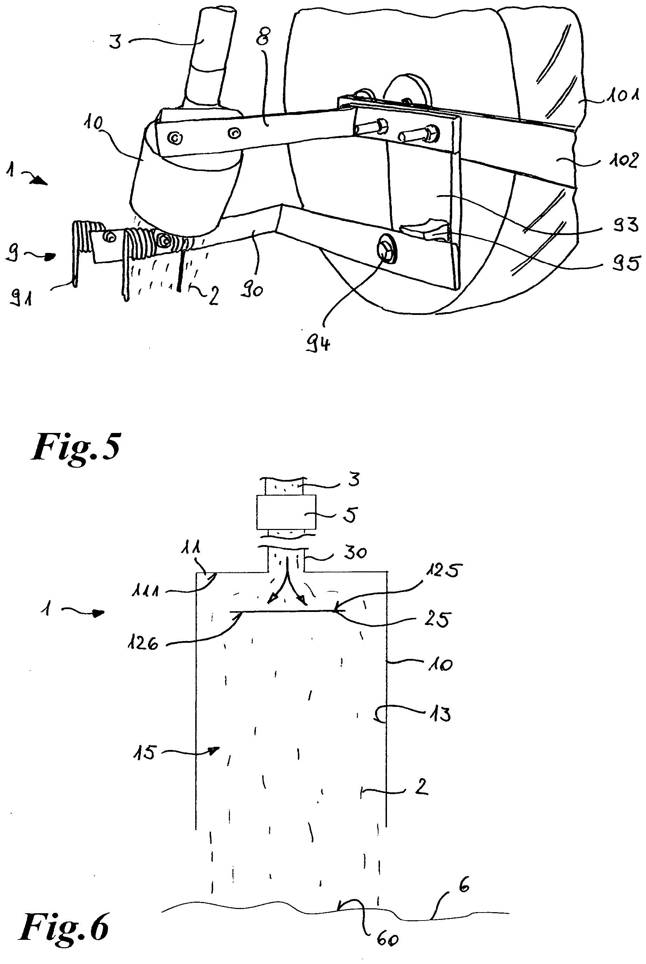

Im Bereich der jeweiligen Gut-Ausbringeinrichtung 1 bzw. in Bewegungsrichtung hinter dieser ist ferner ein weiteres Halteelement 90 vorgesehen, das dem Befestigen eines Rechenelements 9 in einem festen Abstand zu dem jeweiligen Rad 101 dient (siehe auch Figur 5), wobei dieser Abstand zumindest im Wesentlichen dem festen Abstand der Gut-Ausbringeinrichtung 1 von der Ausbringeinrichtung für das Gut 41 entspricht. Das Rechenelement 9 umfasst eine Anzahl von Rechenzinken 91. Diese weisen in der gezeigten Ausführungsvariante jeweils ein schraubenfederartig ausgebildetes Ende 92 auf, an dem sie mit dem Halteelement 90 verbunden sind. Sie können jedoch auch ohne ein solches schraubenfederartig ausgebildetes oder federartiges Ende ausgebildet bzw. vorgesehen sein. Durch ein federartig ausgebildetes Ende ist eine federnde Anordnung der Rechenzinken 92 an dem Halteelement 90 und dementsprechend ein Einfedern bei Überstreichen von Bodenunebenheiten möglich. Das Halteelement 90 ist über ein weiteres Element 93 mit dem Rahmenteil 102 der Vorrichtung verbunden. Die Verbindung erfolgt über ein Lager 94, über das eine Drehgelenkigkeit vorgesehen wird. Ferner weist das Element 93 ein Anschlagselement 95 auf, das einen Anschlag bezüglich der Verschwenkbarkeit des Halteelements 90 gegenüber dem Element 93 schafft.

Durch das Vorsehen des Drehgelenks in Form des Lagers 94 kann das Rechenelement 9 gegenüber dem Rahmen der Vorrichtung 100 beim Überfahren von Bodenunebenheiten ausgelenkt werden und hierdurch sicherstellen, dass die Rechenzinken 92 weiterhin mit einer durch das Gewicht des Rechenelements 9 vorgebbaren Kraft gegen die Bodenfläche 6 drücken, wobei durch das Vorsehen des gelenkig an dem Rahmen der Vorrichtung 100 angeordneten Halteelements 90 bzw. Rechenelements 9 diese Kraft auch bei Überstreichen von Bodenunebenheiten auf die Bodenfläche 6 ausgeübt werden kann, so dass das durch die Gut-Ausbringeinrichtung 1 ausgebrachte Gut 2 flach in den Boden eingearbeitet werden kann.

Anstelle des Vorsehens eines Drehgelenks 94 können auch andere Arten von ein Ausweichen ermöglichenden Einrichtungen vorgesehen, ggf. auch das Halteelement 90 bzw. die Verbindung zum Rahmen der Vorrichtung 100 entsprechend ausgebildet werden, um ein Auslenken bei Überstreichen von Bodenunebenheiten zu ermöglichen und eine gleichmäßige Kraftaufbringung auf die Bodenfläche 6 sicherzustellen. Grundsätzlich kann der Rahmen der Vorrichtung 100 selbst auslenkbar ausgebildet werden, beispielsweise durch Anordnen der einzelnen Rahmenteile in Form eines Parallelogramms, so dass hierüber ein Auslenken bei Überfahren von Bodenunebenheiten und daher ein Aufrechterhalten einer vorbestimmten oder vorbestimmbaren Druckkraft auf die Bodenfläche 6 an jeder Stelle möglich ist. Anstelle des Befestigens des Halteelements 90 an dem Rahmenteil 102 der Vorrichtung 100 kann dieses auch mit einem anderen Teil der Vorrichtung verbunden werden, insbesondere an einer anderen Stelle als im Bereich der Räder 101 der Vorrichtung 100. Dasselbe gilt selbstverständlich für die Gut-Ausbringeinrichtung 1, die vorteilhaft benachbart zu dem Rechenelement 9 fest mit der Vorrichtung bzw. deren Rahmen verbunden ist/wird.

Insbesondere Figur 4 kann ferner entnommen werden, dass die Rechenelemente 9 jeweils nur in dem Bereich der Gut-Ausbringeinrichtung 1 angeordnet sind, also nicht ein durchgängig sich über die gesamte Breite der Vorrichtung erstreckendes Rechenelement 9. Hierdurch ist ein besonders gutes Anpassen an die Formgebung der Bodenfläche 6 bei deren Überstreichen möglich. Wird zusätzlich zu dem oder den Rechenelement(en) 9 die zumindest eine Einrichtung zum Aufbringen der Druckkraft F_{D} und somit zum Andrücken und Ebnen der Bodenfläche 6, insbesondere in Form des Rades 130 vorgesehen, das in Bewegungsrichtung der Vorrichtung 100 vor der Gut-Ausbringeinrichtung 1 angeordnet ist, somit vor dem Ausbringen des Guts die Bodenfläche 6 andrückt und ebnet, kann das Gut auf die mit der Druckkraft beaufschlagte und hierdurch angedrückte und geebnete Bodenfläche 6 ausgebracht und durch das zumindest eine Rechenelement 9 nach dem Ausbringen auf die angedrückte und geebnete Bodenfläche 6 in diese eingearbeitet werden beim Überstreichen derselben mit dem zumindest einen Rechenelement 9. Rechenelement(e) 9 und Rad/Räder 130 sind somit auf zwei einander gegenüberliegenden Seiten der Gut-Ausbringeinrichtung 1 bzw. diese Komponenten in Bewegungsrichtung in Reihe hintereinander angeordnet (Rad/Räder 130, Gut Ausbringeinrichtung 1 und Rechenelement(e) 9), um vor und nach dem Ausbringen des Guts wirksam sein zu können.

Figur 6 zeigt eine gegenüber der Ausführungsform der Verwirbelungseinrichtung 20 nach Figur 1 bis 3 modifizierte Ausführungsform, bei der diese lediglich ein Prallblech 25 aufweist. Das durch das Ende 30 der Gut-Zuführeinrichtung 3 in das Gehäuse 10 der Gut-Ausbringungseinrichtung 1 gelangende Gut 2 prallt somit gegen die Oberseite 125 des Prallblechs 25, wird von dort umgelenkt, prallt gegen die Unterseite 111 des oberen Deckelteils 11, von dort ggf. wieder zurück gegen die Oberseite 125 des Prallblechs 25 und ggf. nochmals gegen die Unterseite 111 des oberen Deckelteils 11, dabei nach und nach zum Rand 126 des Prallblechs 25, von dort gegen die Führungsfläche 13 und zur Austrittsöffnung 15. Es ist somit nicht unbedingt erforderlich, zwei Prallbleche 21, 22 vorzusehen, ein Prallblech 25 ist bereits ausreichend zum Umlenken und Abbremsen des Guts 2.

Neben den im Vorstehenden genannten und in den Figuren gezeigten Ausführungsvarianten von Vorrichtungen zum gezielten Ausbringen von Gut, wie Saatgut, und beliebigen Kombinationen der vorstehend genannten Merkmale können noch zahlreiche weitere Ausführungsvarianten vorgesehen werden, bei denen jeweils die Vorrichtung eine Gut-Ausbringeinrichtung mit einem Gehäuse mit zumindest einer innenseitigen Führungsfläche und zumindest einer Austrittsöffnung zum Austritt des Guts und eine in dem Gehäuse angeordnete Verwirbelungseinrichtung zum Verwirbeln des Guts umfasst, wobei die zumindest eine Führungsfläche des Gehäuses so zu der zumindest einen Austrittsstelle des Guts aus der Verwirbelungseinrichtung angeordnet ist, dass das Gut beim Austritt aus der Verwirbelungseinrichtung auf die zumindest eine Führungsfläche auftrifft und umgelenkt wird und das Gut in einem durch den Durchmesser der zumindest einen Austrittsöffnung des Gehäuses begrenzten Bereich aus diesem austritt.

### Bezugszeichenliste

1 Gut-Ausbringeinrichtung
2 Gut, z.B. Saatgut
3 Gut-Zuführeinrichtung
4 Gut-Vorratsbehälter
5 Gebläse
6 Bodenfläche
7 landwirtschaftliches Fahrzeug
8 Halteelement
9 Rechenelement
10 Gehäuse
11 oberer Deckelteil
12 zylindrische Wandung
13 Innenseite/Führungsfläche
14 Außenseite
15 untere Austrittsöffnung
16 Inneres
17 oberer Teil
20 Verwirbelungseinrichtung
21 oberes Prallblech
22 unteres Prallblech
23 gepunktete Linie
25 Prallblech
30 erstes Ende von 3
31 zweites Ende von 3
40 Gut-Vorratsbehälter
41 zweites Gut
60 begrenzte Fläche
90 Halteelement
91 Rechenzinken
92 schraubenfederartig ausgebildetes Ende
93 Element
94 Lager/Drehgelenk
95 Anschlagelement
100 Vorrichtung
101 Rad
102 Rahmenteil
103 Rahmenteil
104 Rahmenteil
111 Unterseite von 11
121 Unterseite von 21
122 Oberseite von 22
123 Zwischenraum
124 Austrittsbereich
125 Oberseite vom 25
126 Rand
130 Rad
131 erstes Ende
132 Stangenelement
133 Drehgelenk
134 zweites Ende
135 Federelement
136 Ende
137 Ende
138 Kette
139 Anschlagelement
a Abstand
d Durchmesser
h Höhe über 6
F_{D} Druckkraft

## Patentansprüche

1. Vorrichtung (100) zum gezielten Ausbringen von rieselfähigem Streugut (2), wie Saatgut, wobei die Vorrichtung (100) eine Gut-Ausbringeinrichtung (1) mit einem Gehäuse (10) mit zumindest einer innenseitigen Führungsfläche (13) und zumindest einer Austrittsöffnung (15) zum Austritt des Streuguts (2) und eine in dem Gehäuse (10) angeordnete Verwirbelungseinrichtung (20) zum Verwirbeln des Streuguts (2) umfasst, **dadurch gekennzeichnet, dass**
das Gehäuse (10) der Gut-Ausbringeinrichtung (1) zylindrisch ist und eine umlaufende zylindrische Wandung (12) mit einer Innenseite (13) und einer Außenseite (14) und eine in der Betriebsposition untere Austrittsöffnung (15) aufweist, wobei die Innenseite (13) der umlaufenden zylindrischen Wandung (12) als die Führungsfläche für das Streugut dient, um dieses in Richtung zu der unteren Austrittsöffnung (15) zu leiten,
zumindest eine Einrichtung (5) zum Beschleunigen des Streuguts in Form eines Luftstroms, mittels dessen das Streugut (2) transportierbar ist oder transportiert wird, vorgesehen und mit der Verwirbelungseinrichtung (20) gekoppelt ist,
die Verwirbelungseinrichtung (20) zum Verteilen des Streuguts (2) über den Querschnitt des Gehäuses (10) und der Führungsfläche (13) des Gehäuses (10) dient und zumindest ein Prallblech (21,22,25) zum Umlenken und Reduzieren der Bewegungsgeschwindigkeit des Streuguts (2) umfasst und
die zumindest eine Führungsfläche (13) des Gehäuses (10) der Gut-Ausbringeinrichtung (1) so zu dem zumindest einen Austrittsbereich (124) des Streuguts (2) aus der Verwirbelungseinrichtung (20) angeordnet ist, dass das Streugut (2) beim Austritt aus der Verwirbelungseinrichtung (20) auf die zumindest eine Führungsfläche (13) auftrifft, umgelenkt und bezüglich seines Streukreises begrenzt wird und das Streugut (2) in einem durch den Durchmesser (d) der zumindest einen Austrittsöffnung (15) des Gehäuses (10) der Gut-Ausbringeinrichtung (1) begrenzten Bereich (60) aus diesem rieselnd austritt zum flächig begrenzten und gleichmäßigen Ausbringen des Streuguts (2) auf eine Bodenfläche (6) unterhalb der Gut-Ausbringeinrichtung (1).

2. Vorrichtung (100) nach Anspruch 1,
**dadurch gekennzeichnet, dass**
die Verwirbelungseinrichtung (20) in der Seitenansicht L-förmig oder T-förmig ist.

3. Vorrichtung (100) nach einem der vorstehenden Ansprüche,
**dadurch gekennzeichnet, dass**
zumindest ein Gut-Vorratsbehälter (4) vorgesehen ist, der über die Gut-Zuführeinrichtung (3) mit der Gut-Ausbringeinrichtung (1) verbunden ist.

4. Vorrichtung (100) nach einem der vorstehenden Ansprüche,
**dadurch gekennzeichnet, dass**
benachbart zu der Gut-Ausbringeinrichtung (1) zumindest ein an der Vorrichtung (100) auslenkbar befestigtes und/oder federnd ausgebildetes Rechenelement (9) vorgesehen ist.

5. Vorrichtung (100) nach Anspruch 4,
**dadurch gekennzeichnet, dass**
das Rechenelement (9) ein oder mehrere Rechenzinken (91) umfasst, die an einer Halteeinrichtung (90) befestigt sind, die ihrerseits an dem Rahmen der Vorrichtung (100) zum Ausbringen von Streugut (2) gelenkig (94) befestigt ist zum Schaffen einer Auslenkbarkeit.

6. Vorrichtung (100) nach Anspruch 5,
**dadurch gekennzeichnet, dass**
zumindest ein Teil der Rechenzinken (91) des zumindest einen Rechenelementes (9) endseitig federnd, insbesondere schraubenfederartig (92), ausgebildet und dort an der Halteeinrichtung (90) befestigt ist.

7. Vorrichtung (100) nach einem der vorstehenden Ansprüche,
**dadurch gekennzeichnet, dass**
benachbart zu der Gut-Ausbringeinrichtung (1) zumindest eine an der Vorrichtung (100) auslenkbar befestigte und/oder federnd gelagerte Einrichtung (130) zum Aufbringen einer andrückenden und/oder ebnenden Druckkraft (F_{D}) auf die Bodenfläche (6), auf die das Streugut (2) auszubringen ist/ausgebracht wird, vorgesehen ist, insbesondere die Einrichtung (130) ein Rad, eine Rolle, eine Walze oder eine walzenartige Einrichtung ist.

8. Vorrichtung (100) nach einem der vorstehenden Ansprüche,
**dadurch gekennzeichnet, dass**
die Vorrichtung (100) mit zumindest zwei Rädern (101) zum Verfahren der Vorrichtung (100) versehen ist und/oder an ein Fahrzeug (7) anhängbar ist und/oder mit diesem verbindbar ist.

## Claims

1. Apparatus (100) for the targeted application of flowable material to be scattered (2), such as seed, wherein the apparatus (100) comprises a material application device (1) having a housing (10) having at least one internal guide surface (13) and at least one exit opening (15) for the exit of the material to be scattered (2), and a swirl device (20), arranged in the housing (10), for swirling the material to be scattered (2),
**characterised in that**
the housing (10) of the material application device (1) is cylindrical and has a circumferential cylindrical wall (12) having an inner side (13) and an outer side (14), and an exit opening (15) which in the operating position is at the bottom, wherein the inner side (13) of the circumferential cylindrical wall (12) serves as the guide surface for the material to be scattered in order to direct the material to be scattered in the direction towards the bottom exit opening (15),
there is provided and coupled with the swirl device (20) at least one device (5) for accelerating the material to be scattered in the form of an air stream, by means of which the material to be scattered (2) is transportable or is transported,
the swirl device (20) serves to distribute the material to be scattered (2) over the cross section of the housing (10) and of the guide surface (13) of the housing (10) and comprises at least one baffle plate (21, 22, 25) for deflecting and reducing the speed of travel of the material to be scattered (2), and
the at least one guide surface (13) of the housing (10) of the material application device (1) is so arranged relative to the at least one exit region (124) of the material to be scattered (2) from the swirl device (20) that the material to be scattered (2), on exiting the swirl device (20), strikes the at least one guide surface (13), is deflected and limited in respect of its scatter circle, and the material to be scattered (2) exits the material application device (1) in a flowing manner in a region (60) delimited by the diameter (d) of the at least one exit opening (15) of the housing (10) of the material application device for the areally delimited and uniform application of the material to be scattered (2) to an area of ground (6) beneath the material application device (1).

2. Apparatus (100) according to claim 1,
**characterised in that**
the swirl device (20) is L-shaped or T-shaped when viewed from the side.

3. Apparatus (100) according to any one of the preceding claims,
**characterised in that**
there is provided at least one material storage container (4) which is connected *via* the material feed device (3) to the material application device (1).

4. Apparatus (100) according to any one of the preceding claims,
**characterised in that**
adjacent to the material application device (1) there is provided at least one rake element (9) which is fastened to the apparatus (100) so as to be deflectable and/or is in resilient form.

5. Apparatus (100) according to claim 4,
**characterised in that**
the rake element (9) comprises one or more rake prongs (91) which are fastened to a holding device (90) which in turn is fastened in an articulated manner (94) to the frame of the apparatus (100) for the application of material to be scattered (2) in order to create deflectability.

6. Apparatus (100) according to claim 5,
**characterised in that**
at least some of the rake prongs (91) of the at least one rake element (9) are in resilient form at the end, in particular in the form of a coil spring (92), and are fastened there to the holding device (90).

7. Apparatus (100) according to any one of the preceding claims,
**characterised in that**
there is provided adjacent to the material application device (1) at least one device (130), which is fixed to the apparatus (100) so as to be deflectable and/or is resiliently mounted, for applying a pressing and/or levelling pressure (F_{D}) to the area of ground (6) to which the material to be scattered (2) is to be applied/is applied, in particular the device (130) is a wheel, a roller, a cylinder or a cylinder-like device.

8. Apparatus (100) according to any one of the preceding claims,
**characterised in that**
the apparatus (100) is provided with at least two wheels (101) for moving the apparatus (100) and/or is able to be attached to a vehicle (7) and/or is able to be connected thereto.

## Revendications

1. Dispositif (100) pour l'épandage ciblé de matériau pulvérulent (2)tel que des graines, dans lequel le dispositif (100) comporte un dispositif d'épandage de matériau (1) avec un logement (10) avec au moins une surface intérieure de guidage (13) et au moins une ouverture de sortie (15) pour la sortie du matériau pulvérulent (2) et un dispositif de tourbillonnement (20) disposé dans le logement (10) pour faire tourbillonner le matériau (2),
**caractérisé en ce que**
le logement (10) dudispositif d'épandage de matériau (1) est cylindrique et comporte une paroi cylindrique (12) présentant une face interne (13) et une face externe (14), et une sortie inférieure (15) en situation de fonctionnement, dans lequel la face interne (13) de la paroi cylindrique (12) forme une surface de guidage pour le matériau à appliquer, en direction de la sortie inférieure (15),
au moins un dispositif (5) pour accélérer le matériau pulvérulent sous forme d'un flux d'air, permettant de rendre transportable ou de transporter le matériau pulvérulent (2), est prévu et est relié au dispositif de tourbillonnement (20),
le dispositif de tourbillonnement (20) pour distribuer le matériau pulvérulent (2) est disposé transversalement au logement (10) et à la surface intérieure de guidage (13) du logement (10), et comprend au moins un déflecteur (21, 22, 25) pour dévier et réduire la vitesse de déplacement du matériau pulvérulent (2), et
l'au moins une surface de guidage (13) du boîtier (10) du dispositif d'épandage de matériau (1)est disposée par rapport à l'au moins une zone de sortie (124) du matériau pulvérulent (2) du dispositif de tourbillonnement (20) de sorte que le matériau pulvérulent (2) percute l'au moins une surface de guidage (13) à la sortie du dispositif de tourbillonnement (20) et est dévié et limité par rapport à son cercle de diffusion, et de sorte que le matériau pulvérulent (2)tombe sur une zone (60) délimitée par le diamètre (d) de l'au moins une ouverture de sortie (15) du logement (10) du dispositif d'épandage de matériau (1) pour épandre le matériau pulvérulent (2) de manière ciblée sur la surface du sol (6) sous le dispositif d'épandage de matériau (1).

2. Dispositif (100) selon la revendication 1, **caractérisé en ce que** le dispositif de tourbillonnement (20) est en forme de L ou de T en vue de côté.

3. Dispositif (100) selon l'une des revendications précédentes, **caractérisé en ce qu'**il est prévu au moins un conteneur de stockage de matériau (4) qui est relié au dispositif d'épandage de matériau (1) via le dispositif d'alimentation en matériau (3).

4. Dispositif (100) selon l'une des revendications précédentes, **caractérisé en ce qu'**à côté du dispositif d'épandage de matériau (1) au moins un élément de râteau (9) est fixé au dispositif (100) de manière déformable et/ou est conçu pour être élastique.

5. Dispositif (100) selon la revendication 4, **caractérisé en ce que** l'élément de râteau (9) comprend une ou plusieurs dents de râteau (91) qui sont fixées à un dispositif de maintien (90) qui est lui-même fixé au châssis du dispositif (100) d'épandage de matériau pulvérulent (2) de manière articulée (94) pour permettre la modification de son orientation.

6. Dispositif (100) selon la revendication 5, **caractérisé en ce qu'**au moins certaines des dents de râteau (91) de l'au moins un élément de râteau (9) sont élastiques à leur extrémité, en particulier comme un ressort hélicoïdal (92), et sont attachées au dispositif de maintien (90).

7. Dispositif (100) selon l'une des revendications précédentes, **caractérisé en ce qu'**à côté du dispositif d'épandage de matériau (1), il est prévu au moins un dispositif (130) fixé au dispositif pour l'épandage(100) de manière déformable et/ou monté de manière élastique,pour appliquer une force de pression et/ou de nivellement (F_{D}) sur la surface du sol (6) sur lequel le matériau (2) doit être appliqué/est appliqué, en particulier, le dispositif (130) est une roue, un rouleau ou un dispositif semblable à un rouleau.

8. Dispositif (100) selon l'une des revendications précédentes, **caractérisé en ce que** le dispositif (100) comprend au moins deux roues (101) pour déplacer le dispositif (100) et/ou peut être attaché et/ou relié à un véhicule (7).
